# EUROPEAN PATENT SPECIFICATION

(11) **EP 0 673 551 B1**
(45) Date of publication and mention of the grant of the patent: **18.07.2007**
(21) Application number: 93900680.5
(22) Date of filing: 24.11.1992
(51) Int. Cl.: H01M 2/10, F21V 23/04, F21L 4/02, H01H 19/00

(54) **BATTERY POWERED FLASHLIGHT**
BATTERIEBETRIEBENE BLITZLICHTE
LAMPE DE POCHE A PILES

(43) Date of publication of application: 27.09.1995
(73) Proprietor: LASER PRODUCTS CORPORATION, Fountain Valley, CA 92708-6117 (US)
(72) Inventor: MATTHEWS, John, Wallace, Fountain Valley, CA 92708-6117 (US)
(74) Representative: Fenlon, Christine Lesley
(86) International application number: PCT/US1992/010209
(87) International publication number: WO 1994/013022

(56) References cited:
- US-A- 1 423 911
- US-A- 2 769 896
- US-A- 3 111 277
- US-A- 3 701 862
- US-A- 4 250 911
- US-A- 4 530 034
- US-A- 4 760 504
- US-A- 4 783 725
- US-A- 4 788 633
- US-A- 4 803 605
- US-A- 4 860 504
- US-A- 4 876 416
- US-A- 4 914 555
- US-A- 5 161 095
- US-A- 5 171 086
- US-A- 5 359 779

## Description

### Technical Field

The subject inventions relate to flashlights and other battery-powered apparatus for holding and energizing electric transducers.

### Background

Battery-Powered apparatus for holding and energizing one or more electric transducers are well known and include flashlights, laser pointers, and electrically powered tools, to name a few examples.

Prior-art apparatus with rechargeable batteries for powering one or more electric light sources or other transducers either exposed transducers to battery charging currents, especially if the user accidentally turned on a transducer energizing switch, or imposed charging current limitations by charging the batteries through a flashlight filament or other active electric transducer part, or required the provision of special isolated electrodes, wires and the like for feeding battery charging currents through apparatus parts, or exposed battery chargers to shorting through faulty positioning of switches on the apparatus, or had two or more of such drawbacks.

There also is a need for improved switching equipment that can handle selective switching of transducer energizing circuits and of battery charging circuits in battery powered apparatus, and that can perform other switching functions.

There similarly is a need for improved switching equipment that can handle selective energization of at least two electric transducers or other loads.

Especially hand-held light sources with two filaments or lamps typically will produce a well-focused narrow beam from one filament and a very poorly focused irregular beam with dark rings and spots from the other filament, whereas the need is to produce not only a well-focused narrow beam from the higher power lamp, but also a well-focused broad beam 15 from the lower powered lamp.

US 4783725 discloses a flashlight having a refracting section on its reflector.

There also is a need for improved transducer mounts or housings in battery-powered apparatus.

With prior-art flashlights, it is often difficult to retain a well-focused light output when a light source is replaced. Also prior-art flashlights often are impaired by a deteriorating performance because of progressively corroding switch contacts and battery terminal contacts.

### Disclosure of Inventions

It is an object of one of the inventions herein disclosed and claimed to provide improved rechargeable battery-powered apparatus for holding and energizing at least one electric transducer, wherein any transducer is isolated from battery chargers and charging currents, whereby transducers are protected and charging current limitations imposed by transducers are avoided, and wherein battery charging currents are led through parts of the apparatus without the need of any electrodes, wires and the like that would have to be electrically insulated from the apparatus part through which the particular electrode or wire proceeds.

According to one of the inventions herein disclosed, that object is met by battery-powered apparatus for holding and energizing an electric transducer producing an output from a battery current, comprising, in combination, a transducer mount, a hand-held battery housing carrying the transducer mount, a first internal battery terminal contact at the transducer mount, a second internal battery terminal contact remote from the transducer mount, a first external battery charge terminal on the transducer mount, a second external battery charge terminal on a part of the battery housing, a double-throw switch having a common element electrically connected to one of the first and second internal battery terminal contacts, having a first switched contact leading to a first terminal of the electric transducer, and having an opposite second switched contact electrically connected to one of the first and second external battery charge terminals, an actuator for that switch including one of (a) the transducer mount and (b) the above-mentioned part of the battery housing, movable relatively to each other, and current-conducting paths between the other of the first and second internal battery terminal contacts and the other of the first and second external battery charge terminals and a second terminal of the electric transducer.

It is an object of an invention herein disclosed and claimed to provide improved battery-powered apparatus for holding and energizing a first electric transducer producing a first output, and a second electric transducer producing a different second output from a battery current.

That invention resides in such apparatus comprising, in combination, a hand-held battery housing mounting the first and second electric transducers and having a pair of spaced internal battery terminal contacts, an electric transducer energizing circuit between the internal battery terminal contacts and the first and second electric transducers, including an electric switch, comprising a rotary switch actuator threaded to the battery housing for rotary and axial movement relative to the battery housing, a first switch contact part on the battery housing, a second switch contact part coupled tc the rotary switch actuator and in electrical connection with the first switch contact part in a first angular and axial position of the rotary switch actuator, and out of connection from the first switch contact part in a second angular and axial position of the rotary switch actuator, and a third switch contact part coupled to the rotary switch actuator and in electrical connection with the first switch contact part in the second angular and axial position of the rotary switch actuator, and out of connection from the first switch contact part in the first angular and axial position of the rotary switch actuator. The first switch contact part is connected to one of the internal battery terminal contacts, the first electric transducer has a first terminal connected to the second switch contact part, and the second electric transducer has a first terminal connected to the third switch contact part, and the first and second electric transducers have second terminals connected to the other internal battery terminal contact.

It is an object of an invention herein disclosed and claimed to provide improved electric switches.

The invention from a first aspect of that invention resides in an electric switch, comprising, in combination, a support, a rotary switch actuator threaded to the support for rotary and axial movement relative to the support, a first switch contact part on the support, a second switch contact part coupled to the rotary switch actuator and in electrical connection with the first switch contact part in a first angular and axial position of the rotary switch actuator, and out of connection from the first switch contact part in a second angular and axial position of the rotary switch actuator, and a third switch contact part coupled to the rotary switch actuator and in electrical connection with the first switch contact part in the second angular and axial position of the rotary switch actuator, and out of connection from the first switch contact part in the first angular and axial position of the rotary switch actuator.

The invention according to a second aspect thereof resides in an electric switch, comprising, in combination, a support, a rotary switch actuator threaded on the support for rotary and axial movement relative to the support, a first switch contact part on the support, a second switch contact part on the rotary switch actuator, and a third switch contact part coupled to the rotary switch actuator and in electrical connection with the first switch contact part and out of connection from the second switch contact part in a first angular and axial position of the rotary switch actuator, and in electrical connection with the second switch contact part, and out of connection from the first switch contact part in a second angular and axial position of the rotary switch actuator.

It is an object of an invention herein disclosed and claimed to provide an improved electric light source.

The light source according to that invention comprises, in combination, a reflector having a focal point, a first electric lamp having a filament at that focal point, and a second electric lamp extending into that reflector on a side of the first electric lamp. The second electric lamp may have its own refractive lens.

It is an object of an invention herein disclosed and claimed to provide battery-powered apparatus for holding and energizing an electric transducer producing an output from a battery current.

The apparatus according to that invention comprises, in combination, a hand-held battery housing having a pair of spaced internal battery terminal contacts, a transducer housing in the form of a block of electrically conductive material threaded to the battery housing, and a switched electric transducer energizing circuit between the internal battery terminal contacts and the electric transducer. That block of electrically conductive material may have a reflector surface for the transducer.

It is an object of an invention herein disclosed and claimed to provide an improved flashlight.

That invention resides, in combination, in a light source having a base, a light source energizing circuit having an electric switch for a light source in that energizing circuit, a part of that switch releasably fastened outside of said base to a support for that part of the switch, and the light source mounted on that part, whereby the light source is disposable with that part of the switch on which it is mounted. The invention may extend to a replacement for that part of the switch, and a replacement light source mounted on that replacement for that part of the switch.

Another aspect herein disclosed resides in an electric light source, comprising, in combination, a reflector having a focal point, a first electric lamp having a filament at that focal point, a second electric lamp extending into that reflector on a side of the first electric lamp, a battery, and a switching arrangement interconnected between that battery and the first electric lamp in a first position, and interconnected between that same battery and the second electric lamp in a second position of that switching arrangement.

### Brief Description of the Drawings

The subject inventions and their various aspects and objects will become more readily apparent from the following detailed description of preferred embodiments thereof, illustrated by way of example in the accompanying drawings, in which like reference numerals designate like or equivalent parts, and in which:
Fig. 1 is a longitudinal section of a flashlight embodying inventions herein disclosed;
Fig. 2 is a view similar to Fig. 1, showing lamp module and tailcap assemblies in advanced axial positions;
Figs. 3 and 4 are circuit diagrams of transducer energizing and battery charging circuits according to embodiments of an invention herein disclosed;
Fig. 5 is an exploded view of an electric switch incorporated by way of example in the front end assembly of the flashlight of Figs. 1 and 2, and embodying inventions herein disclosed; and
Fig. 6 is an exploded view of an electric switch incorporated by way of example in the rear end assembly of the battery housing of the flashlight of Figs. 1 and 2, and embodying inventions herein disclosed.

### Preferred Embodiments of the Inventions

The drawings show battery-powered apparatus 10 for holding and energizing an electric transducer producing an output from a battery current. One or more batteries 11 may be held in the battery housing. Apparatus within the scope of the invention include flashlights, laser pointers, electrically powered tools, and other devices. Accordingly, the transducer may include one or more light bulbs 12 and/or 13, laser diodes or other battery energized light sources, electric screw drivers or other torque converters, or other electric actuated tools or devices. The output correspondingly may be a high or low beam or other light output 14 and/or 15, or a torque or other physical quantity, but no limitation in this respect is intended hereby.

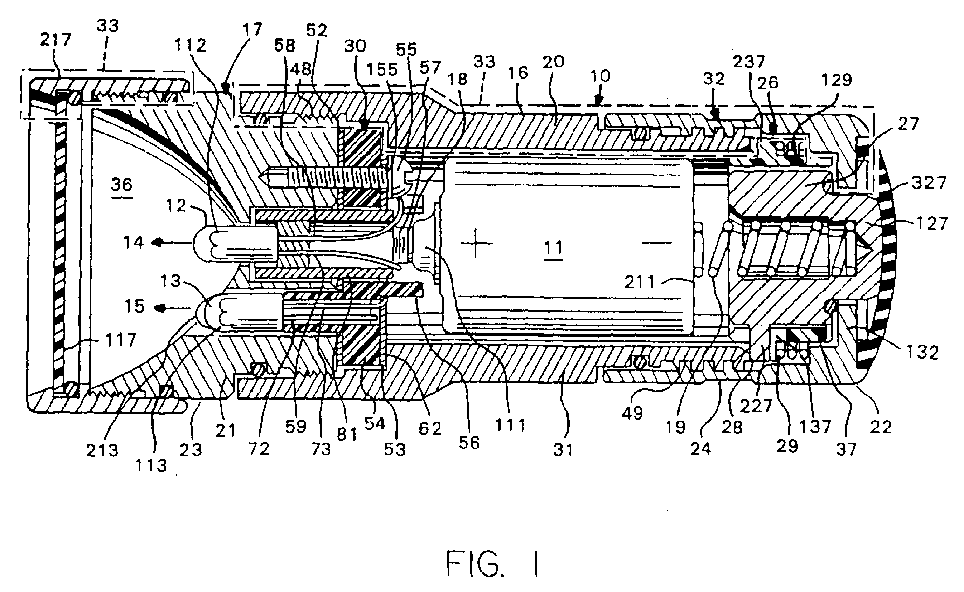

The apparatus 10 has a hand-held battery housing 16 carrying a transducer mount 17. A first internal battery terminal contact 18 is located at the transducer mount. A second internal battery terminal contact 19 is remote from the transducer mount, as seen, for instance, in Fig. 1. An electric transducer energizing circuit 20 may extend between the internal battery terminal contacts 18 and 19 and the electric transducer 12 or transducers 12 and 13.

The apparatus further includes a battery charging circuit 21 and 22 having a first external battery charge terminal 23 on the transducer mount 17 and a second external battery charge terminal 24 on a part of the battery housing, such as more fully disclosed below.

The apparatus moreover includes an electric switching arrangement in the electric transducer energizing circuit 20 and in the battery charging circuit 21 and/or 22 and interconnected between one of the internal battery terminal contacts 18 and 19 and the electric transducer 12 in one position and interconnected between corresponding ones of these internal battery terminal contacts and of the external battery charge terminals 23 and 24 and disconnected from the electric transducer 12 in another position of that switching arrangement.

In particular, the apparatus 10 has a double-throw switch 26 having a common element 27 electrically connected to one of the first and second internal battery terminal contacts, such as the internal battery terminal contact 19 as in Fig. 1. That switch also has a first switched contact 28 leading to a first terminal of the electric transducer, such as via the transducer energizing circuit 20. That switch 26 further has an opposite second switched contact 29 electrically connected to one of the first and second external battery charge terminals, such as to the external battery charge terminal 24 as shown in Fig. 1.

In practice, the switch 26 may be located either at the transducer mount 17 or remote from the transducer mount as shown in Fig. 1.

Accordingly, an actuator for that switch may include either the transducer mount 17 or part of the battery housing. In legal terms, therefore, an actuator for the switch 26 includes one of the transducer mount 17 and part of the battery housing movable relatively to each other, such as more fully disclosed below. Current-conducting paths between the other of the first and second internal battery terminal contacts 18 and 19 and the other of the first and second external battery charge terminals 23 and 24 and a second terminal of the electric transducer 12 are provided for completing the alternative transducer energizing circuit 20 and the battery charging circuit 21 and 22.

As little as one switch may be provided within the scope of the invention. However, according to the illustrated embodiment of the invention, a second switch 30 is connected in series with the double-throw switch 26 and the electric transducer 12 or transducers 12 and 13 as more fully described below. A push-button on/off switch may also be combined with either of the switches 26 and 30 or may otherwise be in the transducer energizing circuit 20.

According to a preferred embodiment of the invention, the battery housing 16 has a barrel 31 and an end cap 32 movable relative to that barrel, and that movable end cap is the above mentioned part of the battery housing having the second external battery charge terminal 24 and being the actuator for the double-throw switch 26.

By way of example, the end cap 32 is of electrically conductive material having an exposed portion constituting one external battery charge terminal 24 on an outside of that end cap and connected to the second switched contact 29 through and by the electrically conductive material from an inside of the end cap to the exposed portion on the outside of that end cap 32.

The electrically conductive end cap 32 is electrically insulated from the barrel 31. Part of the end cap may be of electrically insulating material for this purpose or may have a coating of electrically insulating material. Alternatively or additionally, the barrel may be coated with electrically insulating material.

In this respect, the barrel 31, including its internal and external threads should be considered coated with a layer of electrically insulating material 33 which, for instance, may be an anodization layer if the barrel is of aluminum. To avoid cluttering of the drawings, that layer has only been shown partially by dashed lines at 33 in Fig. 1, but should be understood to cover particularly the internal and external threads at the barrel ends.

Alternatively or additionally, at least the external thread of the transducer mount 17 and the internal thread of the end cap 32 may be anodized or otherwise coated with a layer of electrically insulating material (not shown to avoid crowding).

The first external battery charge terminal 23 on the transducer mount is electrically connected through that transducer mount 17 to the first internal battery terminal contact 18, such as through a conductor 52.

According to a preferred embodiment of the invention, the transducer mount 17 is of electrically conductive material constituting the first external battery charge terminal 23 on an outside of that transducer mount and connected to the first internal battery terminal contact 18 through and by that electrically conductive material from an inside of that transducer mount to the outside of that transducer mount.

Where the transducer mount is anodized or otherwise provided with a coating of insulating material, such coating is removed to provide the external battery charge terminal 23, and is also removed for contact with the conductor 52 that leads to the battery terminal contact 18.

In practice, both the first and second battery charge terminals 23 and 24 may be blank portions of the transducer mount 17 and the end cap 32, respectively.

According to what may also be a separate invention applicable to all kinds of flashlights and other transducer apparatus, the transducer mount 17 is in the form of a block of electrically conductive material threaded to the battery housing 16 and connected to the first internal battery terminal contact 18. That block of electrically conductive material 17 preferably has a reflector surface 36 for the transducer 12 or output 14.

The switch actuator 17 or 32 is threaded to the battery housing 16 or barrel 31 for rotary and axial movement relative to that battery housing or barrel. The expression "threaded to" in this respect is intended to be broad enough to cover "threaded in" as in the case of the transducer mount 17, "threaded on" as in the case of the end cap 32, to name two examples.

Even though the switch 26 may be associated with the threaded or rotatable transducer mount 17, its elements are specifically shown for the case in which the threaded switch actuator is a threaded end cap 32 of the battery housing.

In particular, the double-throw switch 26 has a common element 27 coupled to the threaded switch actuator 32 and in electrical connection with the first switched contact 28 and out of connection from the second switched contact 29 in the first angular and axial position of the threaded switch actuator shown in Fig. 1.

In that case, the transducer energizing circuit 20 is connected to the second battery terminal contact 19 via the common switch element 27 held by the screwed-on end cap 32 via a lip or annulus 132 in engagement with the first switched contact 28 located on a portion of the battery housing 16 such as the preferably electrically conductive barrel 27, against the bias of the second battery terminal contact or spring 19.

The switch 26 may thus be used to turn at least the transducer 12 on and off by rotation and counterrotation of the end cap 32, unless there is another switch 30 in series therewith for that purpose. However, the switch 26 in either case has the important purpose of positively disconnecting any transducer 12 or 13 from the battery 11 so as to prevent any battery charging current at its typically higher battery charging voltage from reaching and thereby endangering any transducer 12 and 13.

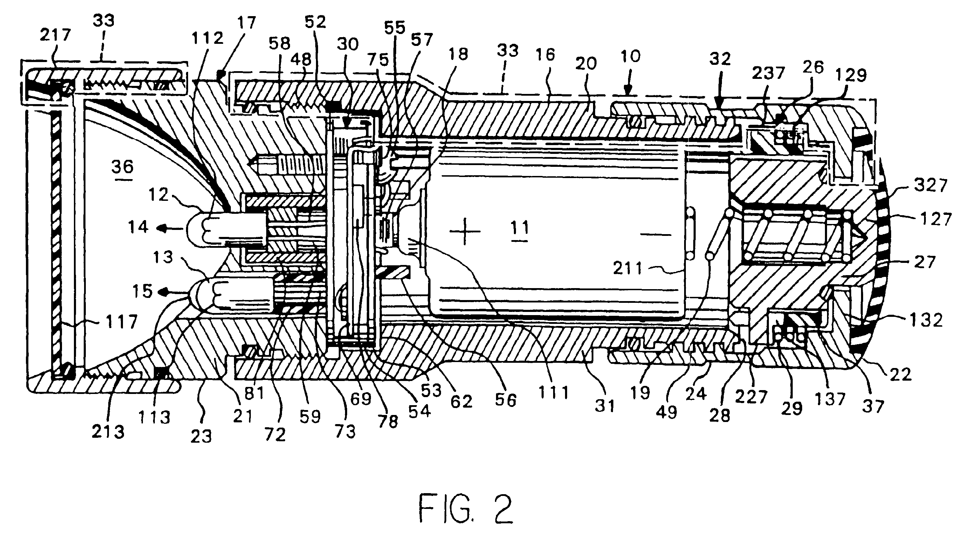

Accordingly, if the common switch element 27 is in electrical connection with the second switched contact 29 in the second angular and axial position of the threaded switch actuator shown in Fig. 2, then it positively is out of connection from the first switched contact 28.

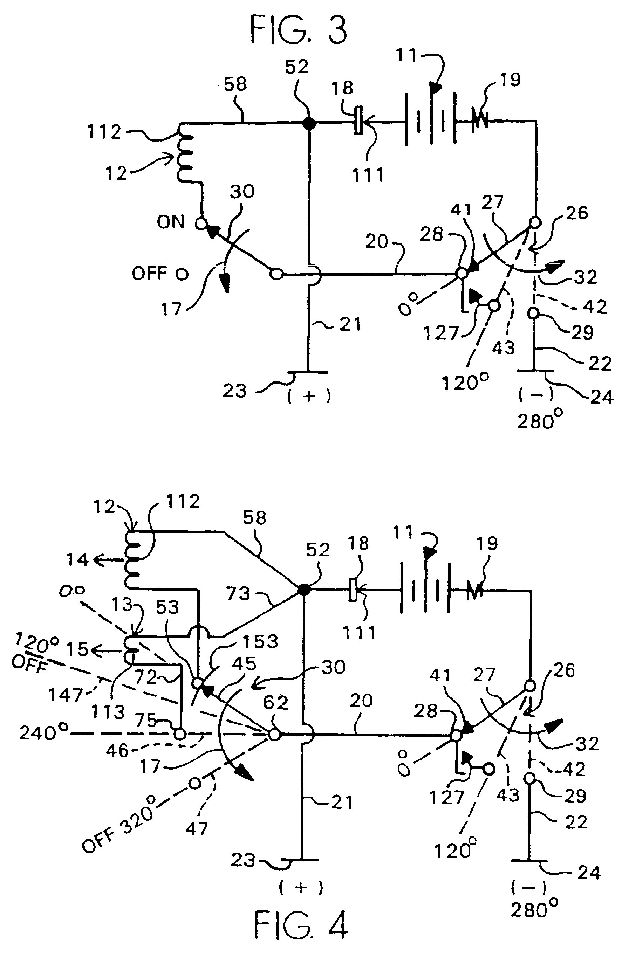

A push-button on/off actuator 127 may be coupled to or integral with the common switch element 27 in circumvention of the threaded switch actuator or end cap 32. According to Fig. 1, the common switch element 27 has a manually engageable portion 127 extending through an aperture in the end cap or its annulus 132. The expression "manually engageable" is intended to be broad enough to cover engagement through a sealing diaphragm 327 or similar device that may be part of the resulting on/off push-button shown in Fig. 1 and schematically in Figs. 3 and 4 at 127.

At least the transducer 12 may thus be flashed on by depression of the push-button 127 and thereby of the common switch element 27 into engagement with the first switched contact 28 on the transducer energizing circuit 20. However, even then is that common element 27 positively disconnected from the battery charging circuit 22 at the second switched contact 29 as seen in Fig. 1.

In particular, the illustrated second switched contact 29 preferably is coupled to the threaded switch actuator or end cap 32. That second switched contact preferably is in the threaded end cap and the common element 27 is between the first and second switched contact 28 and 29 and is coupled to the threaded end cap 32.

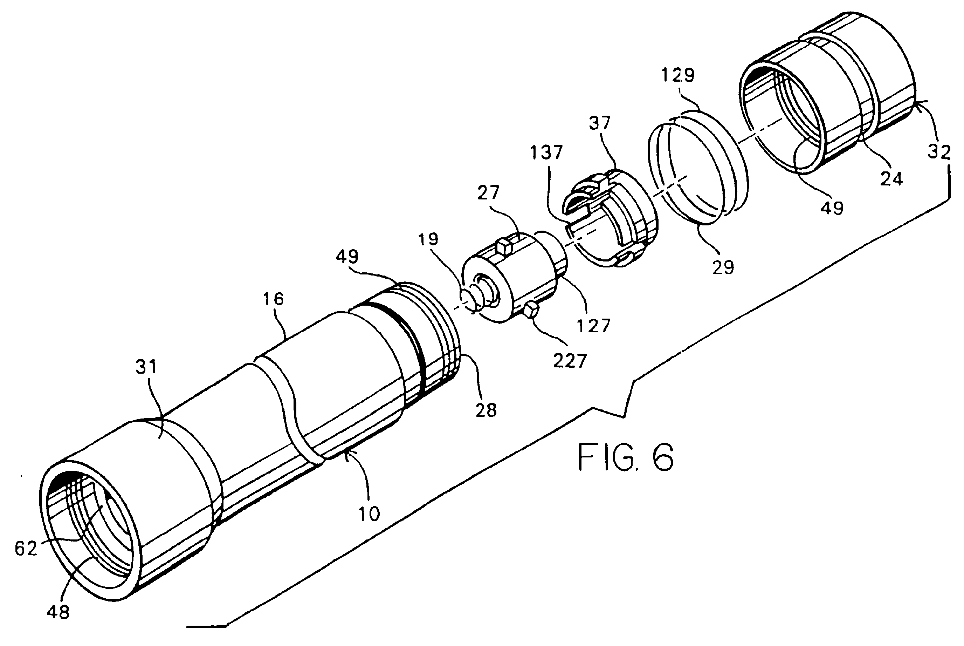

The second switched contact preferably has a conducting resilient portion, such as in the form of a second spring 129. The preferred double-throw switch 26 includes an insulating spacer 37 maintaining the resilient portion 129 and thereby the second switched contact 29 out of connection from said common element 27 in the first angular and axial position of the threaded switch actuator as shown in Fig. 1. The second spring or resilient portion 129 acts on the insulating spacer 37, such as on its lateral projections 237 seen in Figs. 1, 2 and 6. In this respect, the common switch element 27 also has one or more lateral projections 227 where it engages the first switched contact 28 in the position shown in Fig. 1 or alternatively the second switched contact 29 in the position shown in Fig. 2. The projections 227 ride in corresponding slots 137 of the insulating spacer 37. The height of the lateral projection or projections of the electrically conductive common switch element 27 is less in axial direction than the height of the lateral projections of the insulating spacer 37, whereby that insulating spacer is able to keep the second switched contact 29 away from the common switch element 27 in the first position of the threaded cap 32 shown in Fig. 1.

On the other hand, the threaded switch actuator or end cap 32 releases the common element 27 into electrical connection with the conducting resilient portion 129 or second switched contact 29 in circumvention of the insulating spacer 37 upon actuation to the second angular and axial position shown in Fig. 2. The spring of the second internal battery terminal contact 19 may for this purpose be stronger than the spring 129 of the second switched contact 29.

The schematic of Fig. 3 may now be considered. The battery 11 is shown as inserted in the battery housing or barrel 31 with the positive and negative battery terminals 111 and 211 in electric contact with the internal positive and negative battery terminal receiving contacts 18 and 19, respectively.

As apparent from Fig. 3, the electric switching arrangement 26 is in the electric transducer energizing circuit 20 and in the battery charging circuit 22 and is interconnected between the second internal battery terminal contact 19 and the electric transducer 12 in one position 41 of its common switch element 27, and is interconnected between that second internal battery terminal contact 19 and the second external battery charge terminals 24 in another position 42 of that common element 27 of switching arrangement 26, while being then positively disconnected from the transducer energizing circuit.

In this manner, the presently disclosed aspect of the invention achieves the important goal of:
a. keeping any transducer 12, 13, etc., isolated from any and all battery chargers and charging current, even if the user accidentally turns on a second transducer energizing switch (e.g. 30); and
b. keeping any second transducer energizing switch (e.g. 30) out of the battery charging circuit (e.g. 21 and 22), thereby avoiding the need of users having to set two switches in series before charging can take place and thereby avoiding the charging current limitations imposed by prior-art systems which charge through a flashlight filament,
c. while leading any and all battery charging currents through parts 21 and 22 of the apparatus 10, without the need of any electrodes, wires and the like that would have to be electrically insulated from the apparatus part through which the particular electrode or wire proceeds, and
d. while also avoiding a shorting of any battery charger through any faulty switch position.

By way of example, the switch 26 may be a single-pole double-throw switch, with or without an open third position for deenergization of the transducer or of the battery charging circuit in alternate switch positions 41 and 42. In this respect, the expression "double throw" is intended to be broad enough to cover "triple-throw" or "multi-throw."

A push-button on/off switch 127 for the transducer 12 or transducers 12 and 13 may also be in the electric transducer energizing circuit 20, such as in a third position 43 of the switching arrangement 26, in which case the switch 26 may be a triple-throw switch, such as shown in Figs. 3 and 4. In this respect, the common element 27 may have a third or rest position which is symbolically illustrated at 43 in Figs. 3 and 4 and which in the illustrated embodiment would be between the first switched contact 28 and the second switched contact 29 in a third angular and axial position of the threaded switch actuator 32 or in between the first position shown in Fig. 1 and the second position shown in Fig. 2.

The switching arrangement 26 may be implemented at or about the location of the switch 30, such as in the context of the battery charge terminal 23, in which case the other battery charge terminal 24 may be directly connected to the battery terminal contact or spring 19.

Within the scope of the invention, the switch 30 may be omitted, especially if there is only one transducer, and the switch 26 may then perform the function of a first switching arrangement in the electric transducer energizing circuit 20, such as when the switch 26 is in position 41 or 43, and the function of a second switching arrangement in the battery charging circuit 22, such as when the switch 26 is in its position 35.

On the other hand, the switch 30 may be provided in the electric transducer energizing circuit 20 in series with the switch 26, whereby the user has the option to switch the transducer either with the switch 30 or with the switch 26 with or without an on-off push-button 36 or 127. As seen in Fig. 3, the switch 30 may then be a simple on/off switch in series with the first switched contact 28 of the double- or triple-throw switch 26.

The switch 30 is particularly useful if the electric transducer includes a first transducer element 12 providing a first output 14, and a second transducer element 13 providing a different second output 15, such as shown in Figs. 1 and 4 or otherwise. In that case, the first electric switching arrangement may include an at least two-position transducer element electric switch 30 interconnected between the electric transducer energizing circuit 20 and the first transducer element 12 in a first position 45, and interconnected between that electric transducer energizing circuit and the second transducer element 13 in a second position 46 of that transducer element electric switch 30.

The switch 30 may be a rotary switch and may in fact be actuated by rotation or angular movement of the transducer mount 17 which may be threaded to the battery housing 16 or hand-held barrel 31 by mating threads 48 which preferably are electrically insulated from each other. A similarity to the cap 32 which is threaded onto that hand-held barrel 31 of the battery housing 16 by mating threads 49 which preferably are electrically insulated from each other may be noted in this respect.

Figs. 3 and 4 by way of example indicate possible angular positions of the end cap 32 and of the transducer mount 17 relative to the barrel 31 for different switch positions 41 to 43 and 45 to 47 and 147 in terms of degrees of angular movement.

In addition to or even apart from, what has been disclosed so far, the electric switch 26 may be seen as an embodiment of yet another invention, comprising, in combination, a support 16, a rotary switch actuator 32 threaded on that support for rotary and axial movement relative to that support, a first switch contact part 28 on that support, a second switch contact part 29 on or in the rotary switch actuator, and a third switch contact part 27 coupled to that rotary switch actuator 32 and in electrical connection with the first switch contact part 28 and out of connection from the second switch contact part 29 in a first angular and axial position 41 of the rotary switch actuator, and in electrical connection with the second switch contact part 29, and out of connection from the first switch contact part 28 in a second angular and axial position 42 of the rotary switch actuator 32.

The push-button on/off actuator 127 may be coupled to the third switch contact part 27 in circumvention of the rotary switch actuator 32. By way of example, the third contact part 27 and the push-button 127 may be integral in the form of a plunger, such as shown in Figs. 1 and 2.

The second switch contact part 29 may have a conducting resilient portion. By way of example, the second switch contact part may be a spring at 129 abutting and in electrical contact with an exposed internal surface of the electrically conductive end cap or rotary switch actuator 32 leading to the battery charging electrode 24.

The electric switching arrangement 26 preferably includes an insulating spacer 37 maintaining the resilient portion 29 or spring 129 out of connection from the third switch contact part 27 in the first angular and axial position 41 of the rotary switch actuator 32. That spring 129 or resilient portion 29 acts on the insulating spacer 37, such as by biasing the same against the battery housing 16 or its part 28. Since the lateral lug or lugs 237 of the insulating spacer 37 is or are longer in an axial direction than the lateral lug or lugs 227 of the third switch contact part 27, these insulating spacer lugs keep the second switch contact part spaced from the lugs of the third switch contact part, and the end cap 32 and its external electrode 24 are disconnected or isolated from the battery 11 or battery terminal 19 as long as the end cap or rotary actuator is in its first angular and axial position 41. In that case, the battery terminal 19 is connected via plunger 127, third contact part 27, its conductive lugs 227, switch contact 28, conductive housing 16 to the switch 30 for selective energization of the transducer 12 or 13.

Conversely, the rotary switch actuator 32 releases the third switch contact part 27 into electrical connection with the conducting resilient portion 29 in circumvention of the insulating spacer 37 upon actuation to the second angular and axial position 42. In that case, the end cap or actuator 32 and its electrode 24 are connected to the battery terminal 19 for a charging of the battery via electrode or terminal 24, end cap or actuator 32, resilient second switch contact part 129-29, third switch contact part 27 at lugs 227, and battery terminal 19.

Most importantly, that third switch contact part 27 is positively disconnected from the first switch contact part 28 and thus from the transducers 12 and 13 in that second angular and axial position 42 of the rotary end cap or switch actuator 32. In this manner, damage of the transducers 12 and 13 from any battery charger is safely avoided. Also, the battery charging current is not limited by any transducer resistance. Moreover, no battery charger can be damaged through any faulty switch position on or in the flashlight or other apparatus.

The third switch contact part 27 preferably has rest position between the first switch contact part 28 and the second switch contact part 29 in a third angular and axial position 43 of the rotary switch actuator 28. In that rest position, the third contact part 27 or its lugs 227 are spaced from both the first contact part 28 and the second contact part 29. However, the electric switching arrangement 26 preferably includes a push-button or other linear switch actuator 127 connected to or integral with the third switch contact part 27 to turn the transducer 12 or 13 on and off by depression and release of that actuator 127.

In general terms it may be said that the switch 26 includes a spring 19 biasing the third switch contact part 27 away from said first contact part 28. That spring may or may not be a battery terminal, depending on the use to which the switch is put.

The third switch contact part 27 has spaced contact portions engaging the first switch contact part 28 against a bias of the spring 19 in the first angular and axial position 41 of the rotary switch actuator 32, and engaging the second switch contact part 29 in the second angular and axial position 42 of that rotary switch actuator 32. The insulating spacer 37 is between the second and third switch contact parts 29 and 27 in the first angular and axial position 41 of the rotary switch actuator 32 and in any third angular and axial position 43 of that rotary switch actuator 32 between its first and second angular and axial positions 41 and 42. The spacer 37 preferably has or is in the form of a sleeve isolating and insulating the plunger part of the third contact part 27 also from the end cap or rotary switch actuator 32, as may be seen from Figs. 1, 2 and 6.

The battery-operated apparatus may be a flashlight 10 comprising a light source 12 or 13 having a base 81 or a similar base around leads 72 and 73, and a light source-energizing circuit 20 having an electric switch 30 for a light source, such as 12 or 13 in that energizing circuit. A part of that switch is releasably fastened outside of such base to a support for that part of the switch 30. While the embodiment or invention currently being described is applicable to all kinds of flashlights and switches, Figs. 1, 2 and 5 show a switch part or contact carrier 54 as releasably fastened to a support or mount 17, such as with a screw or other fastener 55 that preferably is insulated from any switch contact 53, such as with the aid of an insulating washer 155, or by making the fastener 55 of insulting material.

The light source 12 or 13 is mounted on the part such as 54, whereby that light source is disposable with that part of the switch on which it is mounted.

Accordingly, if the light source 12 and 13 burns out, the switch support or transducer mount 17 may be unscrewed, the fastener removed, and the burned-out light source 12 and/or 13 discarded along with the switch part, such as 54, on which it is mounted.

Fig. 2 as against Fig. 1, for instance, may be taken as showing a replacement for the part 54 of the switch, and a replacement light source 12 and/or 13 mounted on that replacement for that part of the switch 30, since the parts 54 and light sources 12 and/or 13 are identical in Figs. 1 and 2.

Indeed, it is a special 1 advantage of the currently discussed aspect of the invention that the light sources and their replacement 12 may be pre-focused on their supporting switch parts 54 with respect to the reflector 36, so that simple manipulation of a fastener 55 will suffice to have a fresh light source focused in its place in the reflector 36 by simple tightening of the fastener 55. This in contrast to those prior-art flashlights in which the light output deteriorates when a light bulb is replaced, since the filament of the replacement bulb frequently is out of focus with the reflector.

Where the switch 30 has a switch actuator 17 for the part 54 on which the light source 12 or 13 is mounted, that part of the switch may be mounted on that switch actuator as the above mentioned support.

Where the flashlight has a reflector module 17, the part 54 of the switch may be mounted on that reflector module 17 as the above mentioned support, and the light source 12 or 13 extends into that reflector module, which may be a switch actuator for the part 54 on which the light source 12 or 13 is mounted.

By way of example, the battery housing 16 or barrel 31 may be seen as a module support bearing the reflector module 17, with that reflector module being movable relatively to that module support 31. The switch 30 then may have a first contact 62 on that module support 31 and in the light source energizing circuit 20. The part 54 of the switch may have a second contact 53 in engagement with that first contact 62 in the first position of the reflector module 17 shown in Fig. 1 relative to the module support 31, but disengaged from that first contact 62 in the second position of the reflector module 17 shown in Fig. 2 relative to the module support 31. The light source 12 is connected to that second contact 53 in the light source energizing circuit 20.
The disposable part 54 of the switch has a third contact 52 or 18 in the light source energizing circuit 20, and the light source 12 may be connected between such second and third contacts, such as via leads 58 and 59. The reflector module 17 may be threaded to the module support 31, such as at 48, for rotational and axial movement relative to that module support, and the first position, such as shown in Fig. 1, is a first rotational and axial position of that reflector module 17 relative to the module support 31, whilst the second position shown in Fig. 2 is a second rotational and axial position of that reflector module 17 relative to its module support 31.

The reflector 36 preferably is a parabolic reflector for optimised or high power light output 14 of the lamp 12.

If different light outputs 14 and 15 are desired, a light bulb with high-beam and low-beam filaments could be used. However, according to the preferred embodiment shown in Figs. 1, 2, 4 and 5, the flashlight has two separate lamps 12 and 13, one high power, the other low power, and both lamps are mounted in a single reflector 36, with the higher power lamp 12 mounted in a central opening in the reflector and having its filament 112 located at the focus of the reflector, and thus having its beam 14 focused by that reflector, and the lower power lamp 13 being mounted off to the side of the high power lamp 12 in a second opening in the reflector and thus out of focus in the reflector 36. In consequence, the low power lamp 13 does not use the reflector to focus its beam 15, but instead may use a lens 117 on the front of the transducer mount 17. According to a preferred embodiment of this aspect of the invention, there is a refractive lens 213 for the second or low power lamp 13, which may be directly on that lamp for focusing its beam. As shown in Figs. 1-2, the higher and lower power lamps 12, 13, are oriented substantially parallel to one another, pointing in the same direction, and the lower power lamp 13 is recessed in its reflector opening so that substantially only its reflective lens 213 is exposed in the reflector 36.

Compared to using a single lamp with two filaments, which will produce a well-focused narrow beam from one filament and a very poorly focused irregular beam with dark rings and spots from other filament, the illustrated preferred embodiment not only produces a well-focused. narrow beam 14 from the higher power lamp 12, but also can produce a well-focused but broad beam 15 from the lower powered lamp 13.

According to the invention presently under consideration, an electric light source comprises a reflector 36 having a focal point (at 112), a first electric lamp 12 having a filament 112 at that focal point, and a different second electric lamp 13 extending into that reflector 36 on a side of the first electric lamp 12, such as shown in Fig. 1, for instance. There also may be a refractive lens 213 for the second electric lamp 13, but not for both lamps. As seen in Fig. 1, the lens 213 is on the second or low-beam lamp 13 only, and the component 117 is only a flat reflector cover backed by a sealing O-ring and retained by a front-end cap or bezel 217. In that manner, the second lamp 13 has a clearly defined output 15 as well, without the prior-art light and dark ring pattern and other discontinuities.

Where the electric light source has a moveable housing, such as the transducer mount 17, and first and second lamps 12 and 13, the switching arrangement 30 may have a switch actuator coupled to that moveable housing or transducer mount 17. For example, if the lamp housing is rotatable in the battery housing 16, such as through mating threads 48, the switching arrangement 30 may be a rotary switch coupled to and actuated by rotation of the lamp housing between first, second and third positions 45, 46, 47, for instance.

Figs. 1, 2 and 5 show a special switch 30 that may be used in the flashlight or other apparatus 10. That switch 30 may be used with a single light bulb, filament or other transducer 12 or for two such transducers 12 and 13.

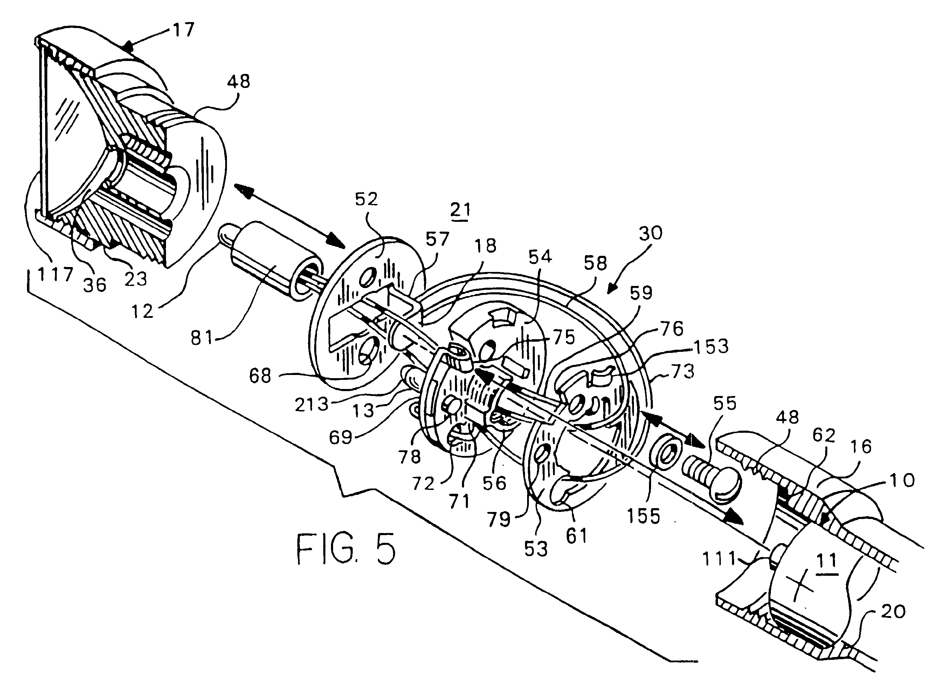

The switch 21 according to Figs. 1 and 5 comprises two contact discs 52 and 53 of which one, such as the disc 52, may be considered the positive contact disc, and the other, such as the disc 53, may be considered tne negative contact disc, depending, however, on the polarity or orientation of the battery 11, which is shown with the positive battery terminal 111 in Figs. 1, 2 and 5, and with the negative terminal 211 in Figs. 1 and 2. The disc 53 may be considered the switching disc.

A disc carrier or insulating disc 54 is sandwiched between the contact discs 52 and 53 of the special switch 30. The insulating disc preferably has a protrusion 56 which extends through the preferably annular switching disc 53 and which receives in this case the positive battery terminal 111. The above mentioned internal battery terminal contact 18 is on a protrusion or prong 57 of the transducer disc 52 forming part of the transducer energizing circuit.

When the switch 30 is assembled and the battery 11 inserted, the prong or internal battery contact 18 contacts the battery pole or terminal 111 in the battery housing 16.

The one transducer 12 has a lead 58 welded or otherwise connected to the transducer disc 52 which is electrically contacted by the positive terminal 111 of the battery 11 at the bent central protrusion of that disc. That protrusion 57 or battery terminal contact 18 and the terminal 111 of the battery 11 touch each other through the center apertures of the outer contact disc 53 and of the insulator disc 54 and are held in contact by virtue of spring pressure constantly applied to the negative end 211 of the battery pack by the spring 19 of the other battery terminal contact.

The other lead 59 of the one transducer 12 extends through apertures in the transducer disc 52 and in the insulating disc 54 to the switching disc 53 to which it is welded or otherwise connected.

When the transducer mount 17 is screwed-in snugly, the outer contact disc 53 to which the second lead 59 of the transducer is affixed, will electrically contact the battery housing 16 or transducer energizing circuit 20 through the uninsulated annular ridge 62 at the base of the internal threads 48 of the transducer mount receptacle or barrel 31. The one transducer 12 is thus energized by the battery 11 if the other switch 26 is in its first position 41, or if that other switch 26 is in its second position 43 and the push-button 127 is depressed, or if there is no other switch 26 and the internal battery terminal contact 19 is directly connected to the battery housing or transducer energizing circuit, such as through the end cap 32. In that case, the switch 30 might be the only switch of the transducer, with or without an on/off push button.

This illustrated embodiment expresses an underlying broader invention that has utility not only with flashlights and other transducer apparatus, but also in other applications where switching is required.

According to the invention presently under consideration, the electric switch 30 comprises a support 16, and a transducer mount or other rotary switch actuator 17 threaded to that support, such as at 48, for rotary and axial movement relative to that support. A first switch contact part 62 is on the support 16, such as in the form of an exposed portion on an otherwise anodized or insulated aluminum or other electrically conductive body, or such as in the form of a contact on an insulating body or support.

The switch 30 also includes a second switch contact part 53 coupled to the rotary switch actuator 17 and in electrical connection with the first switch contact part 62 in a first angular and axial position 45 of the rotary switch actuator, and out of connection from that first switch contact part in a second angular and axial position 46 of the rotary switch actuator 17. The switch 30 further includes a third switch contact part 75 coupled to the rotary switch actuator and in electrical connection with the first switch contact part 62 in the second angular and axial position 46 of the rotary switch actuator, and out of connection from that first switch contact part 62 in the first angular and axial position 45 of the rotary switch actuator 17.

According to an embodiment, the second and third switch contact parts 53 and 75 are out of connection from the first switch contact part 62 in a third angular and axial position 47 of the rotary switch actuator 17.

In this respect, Fig. 4 also indicates a position 147 between the positions 45 and 46. That position 147 may in fact be the third angular and axial position at which the switch contact parts 53 and 75 are out of connection from the first switch contact part 62. That intermediate position 147 thus may be an OFF position of the switch 30, at which both transducers or lamps 12 and 13 are deenergized. The above mentioned third position 47 may then not be necessary.

By way of example, the position 147 may be implemented as an OFF position by making the disc 53 flat so that it will disengage the first contact 62 and thereby interrupt energization of the lamp 12 before the actuator 78 permits the third contact 75 to engage the first contact 62, such as shown in Fig. 2 or at position 46 in Fig. 4.

Both lamps 12 and 13 thus would be deenergized at that point. In practice, this may not be desirable, since it could confuse the user or provide an opportunity for a supposedly switched-off flashlight to switch itself "on" through a relatively slight accidental motion between its transducer mount 17 and barrel 31, thereby unnecessarily draining the battery.

Accordingly, a preferred embodiment of the invention energizes both lamps during the transition between the first and second rotational positions of the switch actuator or rotary transducer mount 17. By way of example, the contact disc 53 may be provided with a protrusion or tang 153 which axially protrudes toward the first switch contact part 62 so as to maintain an electric contact between the switch contact parts 53 and 62 when the switch actuator or transducer module 17 is rotated away from its first rotary and axial position 45 shown in Figs. 1 and 4.

That tang or projection is shown as an arc 153 in Fig. 4, since it maintains both contact parts 53 and 57 in contact with the first contact part and thereby both lamps 12 and 13 energized, while the switch 30 switches the flashlight 10 from one lamp 12 to the other lamp 13; that is, while the switch actuator or lamp mount 17 goes through its rotational and axial position 147.

In this manner, the user, seeing both lamps 12 and 13 energized at this point, will realize that the module 17 has to be rotated further for the first lamp 12 to be turned off.

Of course, depending on the nature of the lamps or other transducers 12 and 13, it may, indeed be useful to have both transducers energized for a compound output 14 and 15.

Nevertheless, the tang 153 is short enough in axial direction relative to the third contact 75 and its actuator or lifter 78 for the first transducer or lamp 12 to be deenergized by movement of the tang 153 away from the first contact part 62 when the mount 17 reaches its rotary and axial position 46 for exclusive energization of the second transducer or lamp 13 until the mount 17 is rotated further, such as to its extreme position 47.

As also shown in the illustrated embodiment, the switch contact actuator 78 is coupled to the third switch contact part 75 and maintains that third switch contact part separated from the first switch contact part 62 in the first angular and axial position 45 of the rotary switch actuator 17.

In the illustrated embodiment under consideration, the first and second switch contact parts 62 and 53 have arcuate portions matching in the first angular and axial position of the rotary switch actuator 17, such as the annular disc 53 matching an annular or arcuate contact 62.

The third switch contact part may be in the form of, or include a projecting electric contact 75 in engagement with the first switch contact part 62 in the second angular and axial position 46 of the rotary switch actuator, and including the switch contact actuator 78 maintaining that projecting electric contact out of engagement from the first switch contact part 62 in the first angular and axial position 45 of the rotary switch actuator 17.

That switch contact actuator 78 in particular may project from the third switch contact part 69/75 toward the first switch contact part 62 in mechanical engagement with that first switch contact part in the first angular and axial position 45 of the rotary switch actuator, maintaining the projecting electric contact 75 out of engagement from that first switch contact part 62. Preferably, the second axial position 46 of the rotary switch actuator 17 is more remote from the first switch contact part 62 than the first axial position 45 of that rotary switch actuator whereby the switch contact actuator 78 is in disengagement from the first switch contact part 62 in the second rotary and axial position 46 of the rotary switch actuator, and the projecting electric contact 75 of the third switch contact part is in electrical connection with the first switch contact part 62 in that second angular and axial position of the rotary switch actuator 17.

The switch 30 may include a rotary contact carrier 54 of insulating material coupled to the rotary switch actuator 17 and bearing the second and third switch contact parts 53 and 75 and its flexible support 69 having an end remote from the free end at 75 attached to the carrier 54. The switch may include an electric terminal 18, with or without 52 and 57, coupled to at least one of the rotary switch actuator 17 and the rotary contact carrier 54.

The illustrated rotary contact carrier 54 has an aperture or hollow protrusion 56 and the first, second and third switch contact parts 62, 53, 69, 75 and 78 are clear of that aperture or hollow protrusion 56. The electric terminal 18 is contained within that aperture or hollow-cylindrical protrusion 56 in the rotary contact carrier 54. Accordingly, the electric terminal 18 either reaches through the opening at 56 to the battery terminal 111, or that battery terminal protrudes into the hollow protrusion 56, meeting the switch terminal 18 therein.

In practice, the rotary switch actuator 17 may house an electric load, such as the transducer or lamp 12, connected to one of the second and third switch contact parts 53 or 69/75 or even supported by one of these contact parts or by the contact carrier 54.

Moreover, that rotary contact carrier 54, coupled to the rotary switch actuator 17 and bearing the second and third switch contact parts 53 and 69/75, may carry a further electric load 13 connected to the other of the second and third switch contact parts 53 or 69/75. The electric terminal 18 is coupled to at least one of the rotary switch actuator 17 and the rotary contact carrier 54, such as via disc 52 and prong 57, and may be connected to the electric loads 12 and 13.

The invention presently to be discussed resides in a battery-powered apparatus 10 for holding and energizing a first electric transducer 12 producing a first output 14, and a second electric transducer 13 producing a different second output 15 from a battery current. That apparatus comprises a hand-held battery housing 16 mounting the first and second electric transducers and having a pair of spaced internal battery terminal contacts 18 and 19, and an electric transducer energizing circuit 20 between the internal battery terminal contacts and the first and second electric transducers 12 and 13, including an electric switch 30. That electric switch comprises a rotary switch actuator 17 threaded on, in or otherwise to the battery housing for rotary and axial movement relative to that battery housing 16, a first switch contact part 62 on the battery housing, a second switch contact part 53 coupled to the rotary switch actuator 29 and in electrical connection with the first switch contact part 62 in a first angular and axial position 45 of the rotary switch actuator, and out of connection from that first switch contact part 62 in a second angular and axial position 46 of the rotary switch actuator, and a third switch contact part 75 coupled to the rotary switch actuator and in electrical connection with the first switch contact part 62 in that second angular and axial position 46 of the rotary switch actuator, and out of connection from that first switch contact part in the first angular and axial position 45 of the rotary switch actuator. The first switch contact part 62 is connected to one of the internal battery terminal contacts, such as to the terminal 19 through battery housing 16 and switch 26.

The first electric transducer 12 has a first terminal at 59 connected to the second switch contact part 53, and the second electric transducer 13 has a first terminal at 72 connected to the third switch contact part 75. These first and second electric transducers have second terminals at 58 and 73 connected to the other internal battery terminal contact 18, such as via disc 52. In this respect, since Fig. 5 is an exploded view, particularly the electrically insulated leads 58, 59, and 73 have come out somewhat longer in that exploded view, than as they are in reality, more realistically shown in the assembly drawings of Figs. 1 and 2.

As already indicated above, the rotary contact carrier 54 bears at least one of the electric transducers, lamps or loads 12 and 13. The rotary switch actuator 17 may be a transducer housing, such as in the form of the above mentioned block of material threaded to the battery housing 16 and preferably having an internal or other reflector surface 36 for the transducer or lamp 12.

Other features herein disclosed may be combined with this aspect of the invention.

Where the light source, as here, includes first and second lamps 12 and 13 mounted on the above mentioned part 54 of the switch 30, that part of the switch may include a first portion 53 in the energizing circuit 20 for switched energization of the first lamp 12, and a second portion 75 in that energizing circuit for switched energization of the second lamp 13. That switch may have a switch actuator 17 for the first and second portions 53 and 75 of the part 54 on which the first and second lamps 12 and 13 are mounted. That part 54 of the switch may be mounted on the switch actuator 17 as its support.

The flashlight may have a reflector module, such as shown at 17 and the part 54 of the switch including the first and second portions 53 and 75 may be mounted on that reflector module as a support of that part 54. The first and second lamps 12 and 13 extend into that reflector module 17, as seen in Figs. 1 and 2.

The reflector module 17 includes a reflector 36 having a focal point (at 112). The first lamp 12 may have a filament 112 at that focal point, such as described above, while the second lamp 13 extends into that reflector 36 on a side of the first lamp 12. There may be a refractive lens 213 for the second lamp 13 only.

The reflector module 17 may be a switch actuator for the first and second portions 53 and 75 of the part 54 on which the first and second lamps 12 and 13 are mounted.

The barrel 31 may form or constitute a module support bearing the reflector module 17, and that reflector module may be movable relatively to that module support. The switch 30 then may have a first contact 62 on that module support 31 and in the light source energizing circuit 20. The above mentioned first portion of the part 54 of the switch has a second contact 53 in engagement with the first contact 62 in a first position 45 of the reflector module 17 relative to its module support and disengaged from that first contact in a second position of the reflector module relative to its module support. That second position may, for instance, be the position 147 when the tang 153 is not present, or the position 47 when that tang is present.

The second portion of part 54 of the switch has a third contact 75 in engagement with the first contact 62 in a third position 46 of said reflector module 17 relative to the module support 31 and disengaged from that first contact 62 in another position of the reflector module 17 relative to its module support. If there is a tang 153 and extra position 147, the later third position may be the position 46. If there is no tang 153, the latter other position may, for instance, be the position 47 or 147. Alternatively, the latter second and third positions may be identical, such as at 46.

The first lamp 12 is connected to the second contact 53 in the light source energizing circuit, and the second lamp 12 is connected to the third contact 75 in that light source energizing circuit 20.

The above mentioned part 54 of the switch may have a fourth contact 18 in the light source energizing circuit 20, and the first lamp 12 is then connected between the second and fourth contacts 53 and 18, such as by wires 58 and 59, whilst the second lamp 13 is connected between the third and fourth contacts 75 and 18, such as by wires 72 and 73.

Where the reflector module 17 is threaded to the module support 31 for rotational and axial movement relative to that module support, the first position is a first rotational and axial position 45 of the reflector module 17 relative to its module support 31, the second position may be a second rotational and axial position 46 or 47 of that reflector module relative to its module support and the third position may be a third rotational and axial position of the reflector module relative to its module support.

When either of the first and second lamps burns out, the screw 55 is removed and the whole unit 12, 13, 18, 52, 53, 57, 69, 75, 78 is discarded and replaced by a like new unit. This will not only provide fresh lamps 12 and 13, but also fresh contacts at 18, 53 and 75 for superior long-time performance of the flashlight or other battery-operated apparatus 10.

This in contrast to the deteriorating performance from progressively corroding switch contacts and battery terminal contacts of prior-art flashlights.

Also, the replaced light bulb 12 or filament 112 will be as well focused as the light bulb or filament it replaces in the transducer mount 17 and reflector 36. For instance, when the replacement unit is manufactures, each bulb 12 may first be cemented or similarly fastened in a sleeve 81 and such sleeve may be mounted on the switch carrier 54, or in its hollow part 56, and the focus of the filament 112 may be checked and rechecked during such manufacturing procedure.

## Claims

1. An electric light source comprising: a reflector (36) having a focal point; a first electric lamp (12) at said focal point; a second electric lamp (13) extending into said reflector on one side of said first electric lamp; and a refractive lens (213) for said second electric lamp.

2. An electric light source as in claim 1, wherein said first electric lamp (12) has a filament (112) at said focal point.

3. An electric light source as in claim 1 or 2, wherein said second electric lamp (13) is oriented substantially parallel to said first electric lamp (12), and said first and second electric lamps (12, 13) are pointed in the same direction.

4. An electric light source as in any one of claims 1 to 3, said reflector (36) having first and second openings formed therein, said first opening located at the center of said reflector, and said second opening located at the side of said first opening; and wherein said first electric lamp (12) is positioned in said first opening in said reflector and said second electric lamp (13) is recessed in said second opening in said reflector such that substantially only said refractive lens (213) of said second electric lamp is exposed in said reflector.

5. Battery-powered flashlight including an electric light source as claimed in any one of claims 1 to 4, the flashlight comprising: a light source mount (17); a hand-held battery housing (16) carrying the light source mount; a first internal battery terminal contact (18) at the light source mount; a second internal battery terminal contact (19) remote from the light source mount; a first external battery charge terminal (23) on the light source mount; a second external battery charge terminal (24) on a part (32) of the battery housing; a double-throw switch (26) having a common element (27) electrically connected to one (19) of the first and second internal battery terminal contacts (18, 19), having a first switched contact (28) leading to a first terminal of the light source, and having an opposite second switched contact (29) electrically connected to one (24) of the first and second external battery charge terminals; an at least two-position electric switch (30) in series with said double-throw switch (26) and with said first electric lamp (12) of said light source in a first position, and with said second electric lamp (13) of said light source in a second position of said at least two-position electric switch; an actuator for said double-throw switch (26) including one of said light source mount (17) and said part (32) of the battery housing movable relatively to each other; and current-conducting paths between the other of the first and second internal battery terminal contacts and the other of the first and second external battery charge terminals and a second terminal of the light source.

6. A flashlight as in claim 5, wherein said battery housing includes a barrel (31) and an end cap (32) movable relatively to the barrel, and said movable end cap (32) being said part of the battery housing having said second external battery charge terminal and being said actuator for the switch.

7. A flashlight as in claim 6, wherein said end cap (32) is of electrically conductive material having an exposed portion constituting said second external battery charge terminal (24) on an outside of said end cap and connected to said second switched contact (29) through and by said electrically conductive material from an inside of said end cap to said exposed portion on said outside of the end cap.

8. A flashlight as in claim 6 or 7, wherein said end cap (32) is electrically insulated from said barrel (31).

9. A flashlight as in any one of claims 2 to 8, wherein said first external battery charge terminal (23) is electrically connected through said transducer mount (17) to said first internal battery terminal contact (18).

10. A flashlight as in any one of claims 2 to 8, wherein said transducer mount (17) is of electrically conductive material constituting said first external battery charge terminal (23) on an outside of the transducer mount and connected to said first internal battery terminal contact (18) through and by said electrically conductive material from an inside of the transducer mount to said outside of the transducer mount.

11. Battery-powered flashlight including an electric light source as claimed in any one of claims 1 to 4, the apparatus comprising: a hand-held battery housing (16) mounting the first and second electric lamps (12, 13) of the light source and having a pair of spaced internal battery terminal contacts (18, 19); an electric light source energizing circuit between the internal battery terminal contacts and the first and second electric lamps (12, 13), the energising circuit including an at least two-position electric switch (30), which switch comprises: a rotary switch actuator (17) threaded to the battery housing (16) for rotary and axial movement relative to the battery housing; a first switch contact part (62) on the housing (16); a second switch contact part (53) coupled to the rotary switch actuator (17) and in electrical connection with the first switch contact part (62) in a first angular and axial position of the rotary switch actuator (17), and out of connection with the first switch contact part (62) in a second angular and axial position of the rotary switch actuator (17); and a third switch contact part (75) coupled to the rotary switch actuator (17) and in electrical connection with the first switch contact part (62) in the second angular and axial position of the rotary switch actuator (17), and out of connection with the first switch contact part (62) in the first angular and axial position of the rotary switch actuator; said first switch contact part (62) being connected to one (19) of said internal battery terminal contacts; said first electric lamp (12) having a first terminal connected to said second switch contact part (53); said second electric lamp (13) having a first terminal connected to said third switch contact part (75); and said first and second electric lamps (12, 13) having second terminals connected to the other (18) internal battery terminal contact.

12. A flashlight as in claim 11, wherein said switch includes a switch contact actuator (78) coupled to the third switch contact part (75) and maintaining that third switch contact part separated from the first switch contact part (62) in the first angular and axial position of the rotary switch actuator (17).

13. A flashlight as in any one of claims 2 to 12, wherein said at least two-position switch has a third position (47) in which the connections made in the first and second positions are open-circuit.

14. A flashlight as in any one of claims 2 to 13, comprising a push-button actuator (127) for the switch.

15. A flashlight as in claim 14 when appended to claim 6, wherein the push-button actuator comprises a switch actuating plunger (127) having a manually engageable portion extending through an aperture in said end cap or rotary switch actuator (32).

## Patentansprüche

1. Elektrische Lichtquelle, umfassend:
einen Reflektor (36), der einen Brennpunkt aufweist;
eine erste elektrische Lampe (12) in dem Brennpunkt;
eine zweite elektrische Lampe (13), die sich auf einer Seite der ersten elektrischen Lampe in den Reflektor erstreckt; und
eine Brechungslinse (213) für die zweite elektrische Lampe.

2. Elektrische Lichtquelle nach Anspruch 1, wobei die erste elektrische Lampe (12) einen Glühfaden (112) im Brennpunkt aufweist.

3. Elektrische Lichtquelle nach Anspruch 1 oder 2, wobei die zweite elektrische Lampe (13) im Wesentlichen parallel zur ersten elektrischen Lampe (12) ausgerichtet ist, und die erste elektrische Lampe (12) und die zweite elektrische Lampe (13) in die gleiche Richtung zeigen.

4. Elektrische Lichtquelle nach irgendeinem der Ansprüche 1 bis 3, wobei im Reflektor (36) eine erste und eine zweite Öffnung ausgebildet sind, und sich die erste Öffnung in der Mitte des Reflektors befindet und die zweite Öffnung an der Seite der ersten Öffnung angeordnet ist, und die erste elektrische Lampe (12) in der ersten Öffnung im Reflektor angeordnet ist und die zweite elektrische Lampe (13) zurückgesetzt in der zweiten Öffnung in dem Reflektor angeordnet ist, so dass im Wesentlichen nur die Brechungslinse (213) der zweiten elektrischen Lampe in den Reflektor ragt.

5. Batteriebetriebene Blinkleuchte, die eine elektrische Lichtquelle nach irgendeinem der Ansprüche 1 bis 4 enthält, wobei die Blinkleuchte umfasst:
eine Lichtquellenhalterung (17);
ein in der Hand zu haltendes Batteriegehäuse (16), das die Lichtquellenhalterung trägt;
einen ersten internen Batterieanschlusskontakt (18) an der Lichtquellenhalterung;
einen zweiten internen Batterieanschlusskontakt (19) entfernt von der Lichtquellenhalterung;
einen ersten externen Batterieladeanschluss (23) an der Lichtquellenhalterung;
einen zweiten externen Batterieladeanschluss (24) auf einem Teil (32) des Batteriegehäuses;
einen Umschalter (26), der aufweist: ein gemeinsames Element (27), das mit dem einen Kontakt (19) der ersten und zweiten Batterieanschlusskontakte (18, 19) elektrisch verbunden ist, einen ersten geschalteten Kontakt (28), der zu einem ersten Anschluss der Lichtquelle führt, und einen gegenüberliegenden zweiten geschalteten Kontakt (29), der elektrisch mit einem Anschluss (24) der ersten und zweiten externen Batterieladeanschlüsse verbunden ist;
einen elektrischen Schalter (30) mit mindestens zwei Positionen in Reihe zu dem Umschalter (26), wobei die erste elektrische Lampe (12) der Lichtquelle in einer ersten Position und die zweite elektrische Lampe (13) der Lichtquelle in einer zweiten Position des elektrischen Schalters mit mindestens zwei Positionen liegt;
eine Betätigung für den Umschalter (26), zu der gehört, dass entweder die Lichtquellenhalterung (17) oder das Teil (32) des Batteriegehäuses relativ zueinander beweglich sind; und
Stromleitwege zwischen dem anderen der beiden ersten und zweiten internen Batterieanschlusskontakte und dem anderen der beiden ersten und zweiten externen Batterieladeanschlüsse und einem zweiten Anschluss der Lichtquelle.

6. Blinkleuchte nach Anspruch 5, wobei das Batteriegehäuse eine Trommel (31) und eine Endabdeckung (32) aufweist, die gegen die Trommel beweglich ist, und die bewegliche Endabdeckung (32) derjenige Teil des Batteriegehäuses ist, der den zweiten externen Batterieladeanschluss aufweist und der die Betätigung für den Schalter ist.

7. Blinkleuchte nach Anspruch 6, wobei die Endabdeckung (32) aus einem elektrisch leitenden Material besteht, das einen freiliegenden Teil aufweist, der den zweiten externen Batterieladeanschluss (24) an einer Außenseite der Endabdeckung bildet und mit dem zweiten geschalteten Kontakt (29) durch und über das elektrisch leitende Material von einer Innenseite der Endabdeckung zum freiliegenden Teil an der Außenseite der Endabdeckung verbunden ist.

8. Blinkleuchte nach Anspruch 6 oder 7, wobei die Endabdeckung (32) elektrisch gegen die Trommel (31) isoliert ist.

9. Blinkleuchte nach irgendeinem der Ansprüche 2 bis 8, wobei der erste externe Batterieladeanschluss (23) über die Transducerhalterung (17) mit dem ersten internen Batterieanschlusskontakt (18) verbunden ist.

10. Blinkleuchte nach irgendeinem der Ansprüche 2 bis 8, wobei die Transducerhalterung (17) aus elektrisch leitendem Material besteht, das den ersten externen Batterieladeanschluss (23) an einer Außenseite der Transducerhalterung bildet und mit dem ersten internen Batterieanschlusskontakt (18) über und durch das elektrisch leitende Material von einer Innenseite der Transducerhalterung zu der Außenseite der Transducerhalterung verbunden ist.

11. Batteriebetriebene Blinkleuchte, die eine elektrische Lichtquelle nach irgendeinem der Ansprüche 1 bis 4 enthält, wobei die Vorrichtung umfasst:
ein in der Hand zu haltendes Batteriegehäuse (16), in dem die erste elektrische Lampe (12) und die zweite elektrische Lampe (13) der Lichtquelle montiert sind und das ein Paar beabstandeter interner Batterieanschlusskontakte (18, 19) aufweist;
eine Energieversorgungsschaltung für die elektrische Lichtquelle zwischen den internen Batterieanschlusskontakten und der ersten elektrischen Lampe (12) und der zweiten elektrischen Lampe (13), wobei die Energieversorgungsschaltung einen elektrischen Schalter (30) mit mindestens zwei Positionen enthält, und der Schalter umfasst: eine rotierende Schaltbetätigung (17), die in das Batteriegehäuse (16) geschraubt ist und sich bezüglich des Batteriegehäuses drehen und axial bewegen kann; einen ersten Schaltkontaktteil (62) auf dem Gehäuse (16); einen zweiten Schaltkontaktteil (53), der mit der rotierenden Schaltbetätigung (17) verbunden ist und in einer ersten Winkel- und Axialposition der rotierenden Schaltbetätigung (17) elektrisch mit dem ersten Schaltkontaktteil (62) verbunden ist, und der in einer zweiten Winkel- und Axialposition der rotierenden Schaltbetätigung (17) keine Verbindung mit dem ersten Schaltkontaktteil (62) hat; und einen dritten Schaltkontaktteil (75), der mit der rotierenden Schaltbetätigung (17) verbunden ist und in der zweiten Winkel- und Axialposition der rotierenden Schaltbetätigung (17) elektrisch mit dem ersten Schaltkontaktteil (62) verbunden ist, und der in der ersten Winkel- und Axialposition der rotierenden Schaltbetätigung keine Verbindung mit dem ersten Schaltkontaktteil (62) hat;
dass der erste Schaltkontaktteil (62) mit einem Kontakt (19) der internen Batterieanschlusskontakte verbunden ist;
dass die erste elektrische Lampe (12) über einen ersten Anschluss mit dem zweiten Schaltkontaktteil (53) verbunden ist;
dass ein erster Anschluss der zweiten elektrischen Lampe (13) mit dem dritten Schaltkontaktteil (75) verbunden ist; und
dass zweite Anschlüsse der ersten elektrischen Lampe (12) und der zweiten elektrischen Lampe (13) mit dem anderen Kontakt (18) der internen Batterieanschlusskontakte verbunden sind.

12. Blinkleuchte nach Anspruch 11, wobei der Schalter eine Schaltkontaktbetätigung (78) enthält, die mit dem dritten Schaltkontaktteil (75) verbunden ist und den dritten Schaltkontaktteil in der ersten Winkel- und Axialposition der rotierenden Schaltbetätigung (17) vom ersten Schaltkontaktteil (62) getrennt hält.

13. Blinkleuchte nach irgendeinem der Ansprüche 2 bis 12, wobei der Schalter mit mindestens zwei Positionen eine dritte Position (47) aufweist, in der die in der ersten und der zweiten Position hergestellten Verbindungen unterbrochen sind.

14. Blinkleuchte nach irgendeinem der Ansprüche 2 bis 13, umfassend eine Druckknopfbetätigung (127) für den Schalter.

15. Blinkleuchte nach Anspruch 14 wenn abhängig von Anspruch 6, worin die Druckknopfbetätigung einen Schalterbetätigungskolben (127) enthält, der einen manuell einrastbaren Abschnitt aufweist, der sich durch eine Öffnung in der Endabdeckung bzw. der rotierenden Schalterbetätigung (32) erstreckt.

## Revendications

1. Source lumineuse électrique comprenant : un réflecteur (36) possédant un foyer ; une première lampe électrique (12) au niveau dudit foyer ; une deuxième lampe électrique (13) s'étendant dans ledit réflecteur sur un côté de ladite première lampe électrique ; et une lentille réfractrice (213) pour ladite deuxième lampe électrique.

2. Source lumineuse électrique selon la revendication 1, dans laquelle ladite première lampe électrique (12) possède un filament (112) au niveau dudit foyer.

3. Source lumineuse électrique selon la revendication 1 ou 2, dans laquelle ladite deuxième lampe électrique (13) est orientée de manière sensiblement parallèle à ladite première lampe électrique (12), et lesdites première et deuxième lampes électriques (12, 13) sont orientées dans la même direction.

4. Source lumineuse électrique selon l'une quelconque des revendications 1 à 3, ledit réflecteur (36) ayant une première et une deuxième ouverture formées à l'intérieur, ladite première ouverture étant située au centre dudit réflecteur, et ladite deuxième ouverture étant située sur le côté de ladite première ouverture ; et dans laquelle ladite première lampe électrique (12) est positionnée dans ladite première ouverture dans ledit réflecteur et ladite deuxième lampe électrique (13) est accueillie dans ladite deuxième ouverture dans ledit réflecteur de telle sorte que sensiblement uniquement ladite lentille réfractrice (213) de ladite deuxième lampe électrique est exposée dans ledit réflecteur.

5. Lampe de poche à piles comprenant une source lumineuse électrique selon l'une quelconque des revendications 1 à 4, la lampe de poche comprenant : un support de source lumineuse (17) ; un boîtier à pile de poche (16) portant le support de source lumineuse ; un premier contact de borne de pile intérieur (18) au niveau du support de source lumineuse ; un deuxième contact de borne de pile intérieur (19) distant du support de source lumineuse ; une première borne de charge de pile extérieure (23) sur le support de source lumineuse ; une deuxième borne de charge de pile extérieure (24) sur une partie (32) du boîtier à pile ; un commutateur bidirectionnel (26) ayant un élément commun (27) connecté électriquement à l'un (19) du premier et du deuxième contact de borne de pile intérieurs (18, 19), ayant un premier contact commuté (28) menant à une première borne de la source lumineuse, et ayant un deuxième contact commuté opposé (29) connecté électriquement à l'une (24) de la première et de la deuxième borne de charge de pile extérieures ; et un commutateur électrique à au moins deux positions (30) en série avec ledit commutateur bidirectionnel (26) et avec ladite première lampe électrique (12) de ladite source lumineuse dans une première position, et avec ladite deuxième lampe électrique (13) de ladite source lumineuse dans une deuxième position dudit commutateur électrique à au moins deux positions ; un actionneur pour ledit commutateur bidirectionnel (26) comprenant l'un dudit support de source lumineuse (17) et de ladite partie (32) du boîtier à pile mobiles l'un par rapport à l'autre; et des chemins conducteurs de courant entre l'autre du premier et du deuxième contact de borne de pile intérieurs et l'autre de la première et de la deuxième borne de charge de pile extérieures et une deuxième borne de la source lumineuse.

6. Lampe de poche selon la revendication 5, dans laquelle ledit boîtier à pile comprend un barillet (31) et un capuchon d'extrémité (32) mobile par rapport au barillet, et ledit capuchon d'extrémité mobile (32) étant ladite partie du boîtier à pile ayant ladite deuxième borne de charge de pile extérieure et étant ledit actionneur pour le commutateur.

7. Lampe de poche selon la revendication 6, dans laquelle ledit capuchon d'extrémité (32) est composé d'un matériau conducteur d'électricité ayant une partie exposée constituant ladite deuxième borne de charge de pile extérieure (24) sur l'extérieur dudit capuchon d'extrémité et connecté audit deuxième contact commuté (29) à travers et par ledit matériau conducteur d'électricité depuis l'intérieur dudit capuchon d'extrémité à ladite partie exposée sur ledit extérieur du capuchon d'extrémité.

8. Lampe de poche selon la revendication 6 ou 7, dans laquelle ledit capuchon d'extrémité (32) est isolé électriquement dudit barillet (31).

9. Lampe de poche selon l'une quelconque des revendications 2 à 8, dans laquelle ladite première borne de charge de pile extérieure (23) est connectée électriquement par le biais dudit support de transducteur (17) audit premier contact de borne de pile intérieur (18).

10. Lampe de poche selon l'une quelconque des revendications 2 à 8, dans laquelle ledit support de transducteur (17) est composé d'un matériau conducteur d'électricité constituant ladite première borne de charge de pile extérieure (23) sur l'extérieur du support de transducteur et connecté audit premier contact de borne de pile intérieur (18) à travers et par ledit matériau conducteur d'électricité depuis l'intérieur du support de transducteur audit extérieur du support de transducteur.

11. Lampe de poche à piles comprenant une source lumineuse électrique selon l'une quelconque des revendications 1 à 4, l'appareil comprenant: un boîtier à pile de poche (16) supportant les première et deuxième lampes électriques (12, 13) de la source lumineuse et ayant une paire de contacts de borne de pile intérieurs espacés (18, 19) ; une source lumineuse électrique qui alimente le circuit entre les contacts de borne de pile intérieurs et les première et deuxième lampes électriques (12, 13), le circuit d'alimentation comprenant un commutateur électrique à au moins deux positions (30), lequel commutateur comprend: un actionneur de commutateur rotatif (17) fileté dans le boîtier à pile (16) pour un déplacement rotatif et axial par rapport au boîtier à pile ; une première partie de contact de commutateur (62) sur le boîtier (16) ; une deuxième partie de contact de commutateur (53) couplée à l'actionneur de commutateur rotatif (17) et en connexion électrique avec la première partie de contact de commutateur (62) dans une première position angulaire et axiale de l'actionneur de commutateur rotatif (17), et non connectée à la première partie de contact de commutateur (62) dans une deuxième position angulaire et axiale de l'actionneur de commutateur rotatif (17) ; et une troisième partie de contact de commutateur (75) couplée à l'actionneur de commutateur rotatif (17) et en connexion électrique avec la première partie de contact de commutateur (62) dans la deuxième position angulaire et axiale de l'actionneur de commutateur rotatif (17), et non connectée à la première partie de contact de commutateur (62) dans la première position angulaire et axiale de l'actionneur de commutateur rotatif ; ladite première partie de contact de commutateur (62) étant connectée à l'un (19) desdits contacts de borne de pile intérieurs ; ladite première lampe électrique (12) ayant une première borne connectée à ladite deuxième partie de contact de commutateur (53) ; ladite deuxième lampe électrique (13) ayant une première borne connectée à ladite troisième partie de contact de commutateur (75) ; et lesdites première et deuxième lampes électriques (12, 13) ayant des deuxièmes bornes connectées à l'autre (18) contact de borne de pile intérieur.

12. Lampe de poche selon la revendication 11, dans laquelle ledit commutateur comprend un actionneur de contact de commutateur (78) couplé à la troisième partie de contact de commutateur (75) et maintenant cette troisième partie de contact de commutateur séparée de la première partie de contact de commutateur (62) dans la première position angulaire et axiale de l'actionneur de commutateur rotatif (17).

13. Lampe de poche selon l'une quelconque des revendications 2 à 12, dans laquelle ledit commutateur à au moins deux positions possède une troisième position (47) dans laquelle les connexions réalisées dans les première et deuxième positions sont à circuit ouvert.

14. Lampe de poche selon l'une quelconque des revendications 2 à 13, comprenant un actionneur de bouton-poussoir (127) pour le commutateur.

15. Lampe de poche selon la revendication 14 lorsqu'elle est jointe à la revendication 6, dans laquelle l'actionneur de bouton-poussoir comprend un plongeur d'actionnement de commutateur (127) ayant une partie pouvant être engagée manuellement s'étendant à travers une ouverture dans ledit capuchon d'extrémité ou l'actionneur de commutateur rotatif (32).
